# EUROPÄISCHE PATENTSCHRIFT

(11) **EP 2 168 017 B1**
(45) Veröffentlichungstag und Bekanntmachung des Hinweises auf die Patenterteilung: **19.12.2012**
(21) Anmeldenummer: 08773436.4
(22) Anmeldetag: 14.06.2008
(51) Int. Cl.: G05B 19/408

(54) **VERFAHREN ZUM BEARBEITEN EINER KONTUR AN WENIGSTENS EINEM WERKSTÜCK MITTELS EINES ROBOTERS**
METHOD FOR MACHINING A CONTOUR ON AT LEAST ONE WORKPIECE BY MEANS OF A ROBOT
PROCÉDÉ POUR USINER UN CONTOUR SUR AU MOINS UNE PIÈCE AU MOYEN D'UN ROBOT

(30) Priorität: 18.07.2007 DE 102007033309
(43) Veröffentlichungstag der Anmeldung: 31.03.2010
(73) Patentinhaber: ABB AG, 68309 Mannheim (DE)
(72) Erfinder: HOFFMANN, Andreas, 42659 Solingen (DE); REGER, Jörg, 35435 Wettenberg (DE)
(86) Internationale Anmeldenummer: PCT/EP2008/004799
(87) Internationale Veröffentlichungsnummer: WO 2009/010137

(56) Entgegenhaltungen:
- DE-A1- 10 002 230
- GB-A- 2 087 107
- US-A- 4 673 795
- US-A- 5 715 375

## Beschreibung

Die Erfindung betrifft ein Verfahren gemäß dem Oberbegriff des Anspruches 1.

Zur Herstellung beispielsweise von Kraftfahrzeugkarosserien werden Karosserieteile in einer Aufnahmevorrichtung so zueinander positioniert, das sich zu bearbeitende Stellen, beispielsweise mit einander zu verschweißende Kanten, im Bearbeitungsbereich des Roboterarmes befinden. Der Roboterarm bewegt sich mit dem Werkzeug, hier einer Schweißspitze entlang der Linie, an der die beiden Werkstücke miteinander verschweißt werden sollen. Häufig sind diese Linien nicht geradlinig, sondern entsprechend der Form der Karosserie gekrümmt, so dass eine darauf programmierten Robotersteuerung die Roboterspitze dieser gekrümmten Linie folgen kann.

Dabei ist zu beachten, dass kein Karosserieteil dem andere identisch gleicht, weil Toleranzen, Verformungen und dergleichen vorhanden sind.

Zu diesem Zweck wird für die Bearbeitung von Karosserieteilen zunächst eine Idealkarosserie hergestellt, die so bearbeitet und verarbeitet ist, dass Toleranzen nahezu zu Null gebracht sind. Diese hochpräzise aufgebaute Idealkarosserie, die auch als Messkarosserie oder Messkarosse bezeichnet wird, dient zur Programmierung der Roboterbewegung. gebildet, der einer durchschnittlichen Verschiebung oder Verdrehung der tatsächlichen Kontur bezogen auf die Kontur der Idealkarosserie entspricht und der in die Steuerung des Roboters eingegeben wird.

Demgemäß wird die Roboterspitze entsprechend dem mittleren Lagevektor verschoben. Das kann zur Folge haben, dass die Roboterspitze nicht exakt der Kontur entlang fährt, wobei die Abweichungen der Bewegung der Roboterspitze von dem der Kontur nicht zu groß sein sollen.

Aus der GB2087107A ist ein Schweißmanipulator bekannt, mit welchem anhand eines Musterwerkstückes unter Verwendung eines Kamerasystems Schweißarbeiten an gleichartigen Werkstücken automatisch durchgeführt werden können, indem das Musterwerkstück mit seinen Schweißnähten von einer am Roboterarm angebrachten Kamera datenmäßig erfasst und die erfassten Daten abgespeichert werden und anschließend die Kamera gegen eine Schweißpistole austauscht wird.

Aus der DE10002230 A1 ist ein Verfahren und eine Vorrichtung zur automatisierten Führung und Steuerung der Bewegungen eines Industrieroboters auf der Basis von optischen Messsystemen, die mit Hilfe von Laserbeleuchtungseinrichtungen und Kameratechnik auf der Basis der Triangulationstechnik Bauteile vermessen und daraus Steuersignale für die Korrektur von Roboterbewegungen ableiten, wobei extern angeordnete, kalibrierte Vermessungssysteme eingesetzt werden, mit denen in einem ersten Verfahrensschritt ein Musterstück mit einer einem realen Bauteil entsprechenden Geometrie, welches temporär von einem Industrieroboter in der Position gehalten wird, in der üblicherweise das reale Bauteil positioniert wird und hinsichtlich seiner Merkmale absolut im Koordinatensystem des Industrieroboters 1 vermessen wird. Dann werden in weiteren Schritten nach identischem Auswerteverfahren gleichfalls gleichartige reale Bauteile vermessen, wobei aus dem Vergleich der ermittelten Positionen der Merkmale mittels Referenzwerten Offsetvektoren ermittelt werden. Schließlich erfolgt aus der Differenz der ermittelten Offsetvektoren bei den realen Bauteilen und dem Offsetvektor des Musterstücks eine Transformation des Bewegungsprogramms des Industrieroboters für die Ausführung der technologischen Bewegung.

Aufgabe der Erfindung ist es, ein Verfahren der eingangs genannten Art zu schaffen, mit dem eine verbesserte Bearbeitung, beispielsweise einer Karosserie, erfolgen kann.

Diese Aufgabe wird bei einem Verfahren der Eingangs genannten Art gelöst durch die Merkmale des kennzeichnenden Teils des Patentanspruches 1.

Erfindungsgemäß also ist das Verfahren zum Bearbeiten einer Kontur an wenigstens einem Werkstück, insbesondere zum Schweißen oder Abdichten einer Naht zwischen zwei Werkstücken, insbesondere zwischen zwei Karosserieteilen, mittels eines Roboters, gekennzeichnet durch folgende Verfahrensschritte:
- Positionieren des zu bearbeitenden Werkstückes zum Roboter und/oder
- Erfassen der tatsächlichen Lage des Werkstückes,
- Erfassen des realen Verlaufes der Kontur am Werkstück an vorbestimmten Punkten mittels wenigstens eines Sensors und Ermitteln von Verschiebevektoren an den vorbestimmten Punkten,
- Ansteuerung des Roboters entsprechend den Verschiebevektoren zur Korrektur der Bewegung des Roboters beim Bearbeiten der Kontur,
- wobei zur Bearbeitung eines nicht sichtbaren abgedeckten Konturverlaufes, zum Beispiel einer nicht sichtbaren Naht an einer Kfz-Karosserie in der Nähe einer sichtbaren Kontur, zunächst sichtbare Punkte der sichtbaren Kontur erfasst und gemessen werden und hieraus die Lage der nicht sichtbaren Naht errechnet wird.

Für den Fall, dass die Kontur eines realen, und Toleranzen behafteten Werkstückes bearbeitet werden soll, ist das Verfahren gemäß Anspruch 2 zusätzlich durch folgende Schritte gekennzeichnet:
- Positionieren eines als Referenzwerkstück ideal hergestellten Werkstückes zum Roboter,
- Ermitteln des idealen Verlaufes der Kontur dadurch, dass der Roboter mittel wenigstens eines Sensors den Verlauf der Kontur an dem Referenzwerkstück an vorbestimmten Punkten erfasst,
- Positionieren des mit Toleranzen behafteten realen Werkstückes zum Roboter und/oder Erfassen der tatsächlichen Lage des realen Werkstückes,
- Erfassen des realen Verlaufes der Kontur am Werkstück an den vorbestimmten oder anderen Punkten mittels wenigstens eines Sensors
- und damit der Abweichung des realen Verlaufs an den vorbestimmten Punkten von dem idealen Verlauf,
- Errechnen von den Abweichungen entsprechenden Verschiebevektoren
   und
- Ansteuerung des Roboters entsprechend den Verschiebevektoren zur Korrektur der Bewegung des Roboters beim Bearbeiten der Kontur.

Diese Verschiebevektoren entsprechen den Toleranzen, die sich bei dem realen Werkstück gegenüber dem sogenannten idealen Werkstück ergeben. Mit den Verschiebevektoren, wird die Bewegung des Werkzeuges an der Roboterspitze dem realen Verlauf der zu bearbeitenden Kontur angepasst. Gegenüber der bekannten Methode, bei der ein mittlerer Verschiebe- oder Lagevektor errechnet wird, wird ein Verschiebevektor jedem einzelnen vorbestimmten Punkt zugeordnet, so dass die Bearbeitung insgesamt genauer wird.

Weitere vorteilhafte Ausgestaltungen des Verfahrens sind den Unteransprüchen zu entnehmen.

Das Verfahren wird bei einer Kraftfahrzeugkarosserie so durchgeführt, dass jede Kontur der Idealkarosserie an bestimmten Messpunkten definiert wird, in dem der Messpunkt mittels einer Kamera oder mehrerer Kameras erfasst wird; bei der Realkarosserie werden die entsprechenden Messpunkte ebenfalls in gleicher Weise erfasst und mit jeweils eigenem Einzel- bzw. Verschiebevektor versehen bzw. berechnet, so dass die Bauteiltoleranzen und Einbautoleranzen der gesamten Karosserie ausgleichbar ist.

Die Ausgestaltung der Erfindung lässt sich bei der Bearbeitung eines nicht sichtbaren, abgedeckten Konturverlaufes erzielen, zum Beispiel einer nicht sichtbaren Naht an einer Kfz-Karosserie, in der Nähe einer sichtbaren Kontur, in dem zunächst sichtbare Punkte der sichtbaren Kontur erfasst und gemessen werden und hieraus die Lage der nicht sichtbaren Naht errechnet wird.

Dabei können in zweckmäßiger Weise die sichtbare Kontur des realen Werkstückes in mehrere Sektoren aufgeteilt und in jedem Sektor eine Teilmessung bestimmter Punkte durchgeführt werden, wodurch Korrekturwerte für jeden Sektor ermittelt werden, so dass Werkstück- und Lagetoleranzen ermittelt und der Verlauf der Roboterbewegung berechnet werden.

Die Ausmessung der sichtbaren Punkte erfolgt mittels einer Laserkamera und wird bearbeitet und mathematisch verarbeitet mit einem Triangulationsmessverfahren welches an sich bekannt ist.

Anhand der Zeichnung, in der einigen Ausführungsbeispiele der Erfindung dargestellt sind, sollen die Erfindung, weitere vorteilhafte Ausgestaltungen und Verbesserungen sowie weitere Vorteile näher erläutert und beschrieben werden.

### Es zeigen:

- Fig. 1: eine Aufsicht auf ein ideales Werkstück,
- Fig. 2: eine Aufsicht auf ein reales zu bearbeitendes Werkstück mit eingetragenen Lagevektoren,
- Fig. 3: das Werkstück gemäß Fig. 2 mit der tatsächlichen Führungsbahn des Roboterwerkzeugs,
- Fig. 4: eine Seitenansicht einer Kraftfahrzeugtür und
- Fig. 5: eine Schnittansicht gemäß Schnittlinie V-V der Fig. 4.

Ein Werkstück 10, welches beispielsweise eine Kraftfahrzeugkarosserie oder dergleichen sein kann, ist hier als rechteckiges, flächiges Bauteil dargestellt, welches an einer Längskante 11 mit der Längskante 12 eines weiteren Werkstücks 13 verschweißt werden soll. Die beiden Werkstückteile 10 und 13 besitzen gerade lineare Kanten 11 und 12 und sind demgemäß auch als sogenannte Idealwerkstückteile zu bezeichnen.

Ein Roboterarm, der hier nicht dargestellt ist, fährt mit einem Sensor, der beispielsweise eine Kamera sein kann, den Linien 11 und 12 entlang und macht, beginnend vom Startpunkt 14 an vorbestimmten Stellen 15, 16, 17, 18 und 19 Bilder, deren Signale in einem Speicher abgelegt werden.

Ein reales Werkstück 20 unterscheidet sich von dem idealen Werkstück 10 dadurch, dass die der Kante 11 entsprechenden Kante 21 gegenüber der Idealkante 11' verändert ist, insoweit als die reale Kante 21 eine S-Form aufweist, die die ideale Kante 11' an bestimmten Punkten 11" und 11"' schneidet.

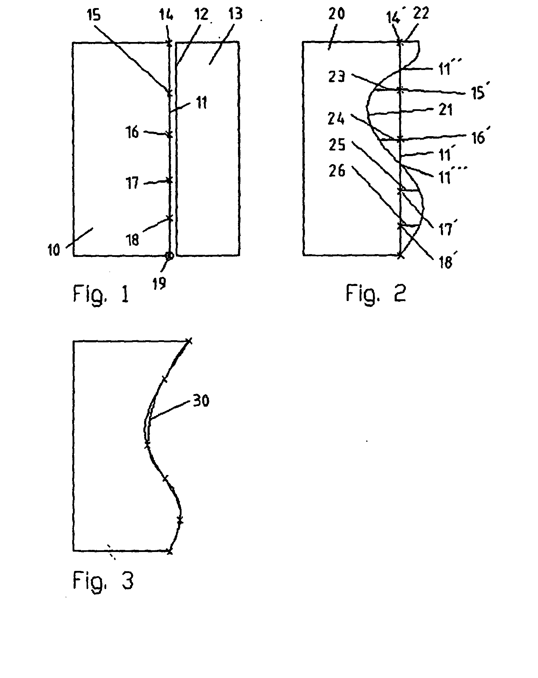

Der Roboter mit dem Sensor fährt die Kurve 11' entlang und mit der Kamera werden an den gleichen Punkten 14', 15', 16', 17', 18' und 19' Bilder aufgenommen, wobei die den Bildern zugehörigen Signale ebenfalls in einem Speicher gespeichert werden. Die tatsächliche Kontur 21 weicht von der idealen Kontur ab, was durch Vergleich der sogenannten Idealsignale mit den Realsignalen errechnet wird, wodurch Lagevektoren 22, 23, 24, 25 und 26 errechnet werden, mit denen die von dem Roboter abzufahrende Kontur aus den Idealpunkten zu den Realpunkten verschoben wird. Man erhält dadurch, wie aus Fig. 3 ersichtlich, eine Bewegungsbahn 30, wobei die Bewegungsbahn zwischen den einzelnen Messpunkten je eine gerade Linie bildet, die der realen Kurve oder realen Kontur 21 angenähert ist. Mit Erhöhung der Anzahl der Messpunkte kann eine bessere Annäherung der Bewegungsbahn des Roboters an die tatsächliche Kontur erreicht werden. Die Bewegungsbahn des Roboters gemäß Fig. 1 kann auch als Trainingsfahrt bezeichnet werden; der nächste Schritt gemäß Fig. 2 ist eine Messfahrt, bei der die reale Werkstückkontur ausgemessen wird und die Bewegungsbahn 30 gemäß Fig. 3 ist die korrigierte Bahn 30, entlang welcher der Roboter im Anwendungsfall entlangfährt.

Die Arbeitsweise der Erfindung ist oben an einem sehr einfachen Werkstückteil dargestellt worden. In der Fig. 1 ist dargestellt, dass die beiden Kanten der Werkstückteile nebeneinander liegen; in der Realität überlappen sich die Kanten, so dass an den entsprechenden Stellen und den entsprechenden Konturen Punktschweißarbeiten durchgeführt werden können.

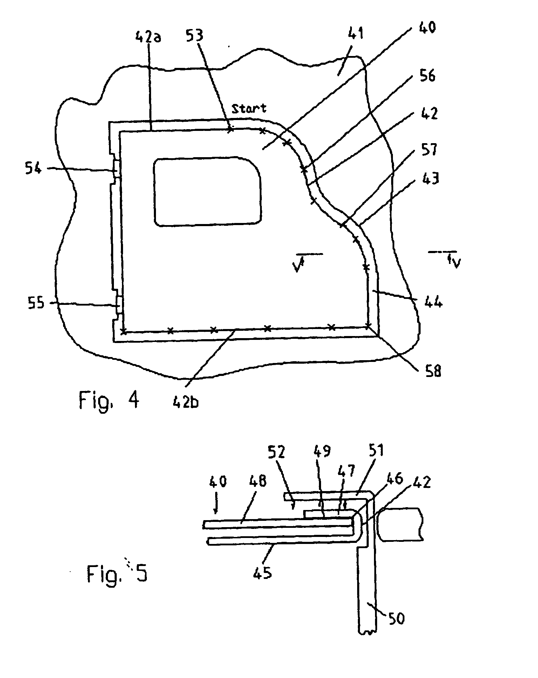

Ein besonderer Fall ist das abdichten einer sogenannten verdeckten Naht. Es sei hierzu Bezug genommen auf die Figuren 4 und 5. Die Fig. 4 zeigt eine Aufsicht auf eine Tür 40 innerhalb einer Karosserie 41, wobei zwischen der Umfangskante der Tür 42 und der Innenkante 43 der Karosserie 41, die der Außenkontur der Tür 40 angepasst ist, ein Spalt 44 gebildet ist, der möglichst eng ausgebildet sein soll. In der Fig. 5 ist eine Schnittansicht gemäß Schnittlinie V-V dargestellt. Die Tür 40 besitzt hierbei ein Außenblech 45, das an den Endkanten 42 L-förmig nach innen umgebogen ist, so dass eine U-Form 46 gebildet ist, die einen freien, parallel zur Türfläche verlaufenden Schenkel 47 besitzt. Das Außenblech 45 wird zu der Tür dadurch ergänzt, dass ein Innenblech 48 vorgesehen ist, welches in die U-Form 46 eingreift, so dass der Schenkel 47 einen Teilbereich des Innenbleches 48 überdeckt. Der Schenkel 47 ist mit dem Innenblech 48 gegebenenfalls durch Verklebung oder durch Punktschweißverfahren verbunden. Es bildet sich hierbei ein dünner Spalt 49, durch den gegebenenfalls Feuchtigkeit in den Innenraum zwischen dem Außenblech 45 und dem Innenblech 48 eindringen kann. Zu diesem Zweck wird der Spalt 49 oder auch die Naht 49 abzudichten sein, was hier mit einem L-förmigen Werkzeug 45 erfolgt, an dessen L-förmigem Schenkel 51 ein nicht näher gezeigter Schlitz vorgesehen ist, durch den durch Pfeile angedeutetes Dichtmaterial 52 austreten und die Naht 49 überdecken kann.

Die Naht 49 ist hierbei eine sogenannte verdeckte Naht, die nicht durch einen Sensor detektiert werden kann.

Detektiert und erfasst wird hierbei die Kontur 42 der Tür an bestimmten Messpunkten, die in der Fig. 5 mit Kreuzen bezeichnet sind. Der Beginn der Erfassung der Kontur 42 ist der Startpunkt 53, und entsprechend der geschwungenen Kontur 42, die den Gelenkpunkten 54 und 55 der Tür 40 entgegengesetzt liegt, wird mit einem Sensor eine bestimmte Anzahl von Messpunkten erfasst, deren Menge von dem Verlauf der Kontur 42 abhängig ist. Nach dem Erfassen der einzelnen Messpunkte, von denen lediglich beispielhaft die Messpunkte 56, 57 und der Endmesspunkt 58 bezeichnet sind, und Ablegen der durch den Sensor ermittelten Signale in einem Speicher werden die Messpunkte unter Berücksichtigung der Lagevektoren, siehe Fig. 2, die in diesem Bereich erfasst worden sind, rechnerisch verschoben und dadurch die Bewegung des Werkzeuges 55 errechnet. Danach wird das Werkzeug in geeigneter Weise in den Spalt 44 eingefädelt und so angeordnet, wie in der Fig. 5 dargestellt, so dass der Schenkel 51 parallel zum Schenkel 47 verläuft, und entsprechend der neu berechneten, realen Kontur fährt das Werkzeug 50 in dem Spalt 44 der Kontur 42 entlang, wobei das Abdichtmaterial 52 von hinten an den Spalt herangeführt wird. Das Gleiche erfolgt natürlich auch für die Kontur 42a im oberen und die Kontur 42b im unteren Bereich der Tür 40.

### Bezugszeichenliste

- 10: Werkstück
- 11: Längskante/Linien
- 11': Idealkante
- 12: Längskante/Linien
- 13: Weiteres Werkstück
- 14: Startpunkt
- 15: Vorbestimmte Stelle
- 16: Vorbestimmte Stelle
- 17: Vorbestimmte Stelle
- 18: Vorbestimmte Stelle
- 19: Vorbestimmte Stelle
- 20: Reales Werkstück
- 21: Reale Kante
- 22: Lagevektor
- 23: Lagevektor
- 24: Lagevektor
- 25: Lagevektor
- 26: Lagevektor
- 30: Bewegungsbahn
- 40: Tür
- 41: Karosserie
- 42: Endkante
- 42a: Kontur im oberen Bereich der Tür
- 42b: Kontur im unteren Bereich der Tür
- 43: Innenkante
- 44: Spalt
- 45: Außenblech
- 46: U-Form
- 47: Schenkel
- 48: Innenblech
- 49: Spalt/Naht
- 50: Werkzeug
- 51: L-förmiger Schenkel
- 52: Abdichtmaterial
- 53: Startpunkt
- 54: Gelenkpunkt
- 55: Gelenkpunkt
- 56: Messpunkt
- 57: Messpunkt
- 58: Endmesspunkt

## Patentansprüche

1. Verfahren zum Bearbeiten einer Kontur an wenigstens einem Werkstück, insbesondere zum Schweissen oder Abdichten einer Naht zwischen zwei Werkstücken, insbesondere zwischen zwei Karosserieteilen, mittels eines Roboters,
mit folgenden Verfahrensschritten:
- Positionieren des zu bearbeitenden Werkstückes zum Roboter und/oder Erfassen der tatsächlichen Lage des Werkstückes,
- Erfassen des realen Verlaufes der Kontur am Werkstück an vorbestimmten Punkten mittels wenigstens eines Sensors,
- Ansteuerung des Roboters entsprechend den Einzelvektoren zur Korrektur der Bewegung des Roboters beim Bearbeiten der Kontur,
- **dadurch gekennzeichnet, dass** zur Bearbeitung eines nicht sichtbaren abgedeckten Konturverlaufes, zum Beispiel einer nicht sichtbaren Naht an einer Kfz-Karosserie in der Nähe einer sichtbaren Kontur, zunächst sichtbare Punkte der sichtbaren Kontur erfasst und gemessen werden und hieraus die Lage der nicht sichtbaren Naht errechnet wird.

2. Verfahren nach Anspruch 1, mit dem eine Kontur eines mit Toleranzen behafteten realen Werkstückes bearbeitet wird, **gekennzeichnet durch** folgende Schritte:
- Positionieren eines als Referenzwerkstück ideal hergestellten Werkstückes zum Roboter, Ermitteln des idealen Verlaufes der Kontur dadurch, dass der Roboter mittels wenigstens eines Sensors den Verlauf der Kontur an dem Referenzwerkstück an vorbestimmten Punkten erfasst,
- Positionieren des mit Toleranzen behafteten realen Werkstückes zum Roboter und/oder Erfassen der tatsächlichen Lage des realen Werkstückes,
- Erfassen des realen Verlaufes der Kontur am Werkstück an den vorbestimmten oder anderen Punkten mittels wenigstens eines Sensors und damit der Abweichung des realen Verlaufs an den vorbestimmten Punkten von dem idealen Verlauf,
- Errechnen von den Abweichungen entsprechenden Einzelvektoren und Ansteuerung des Roboters entsprechend den Einzelvektoren zur Korrektur der Bewegung des Roboters beim Bearbeiten der Kontur.

3. Verfahren nach einem der Ansprüche 1 und 2, **dadurch gekennzeichnet, dass** das Werkstück mittels eines Fördersystems in eine Roboterstation mit dem Roboter transportiert wird.

4. Verfahren nach Anspruch 2, **dadurch gekennzeichnet, dass** die Lage des Werkstückes mittels wenigstens eines Lagesensors, insbesondere eines optischen Erkennungssystems, bestimmt wird.

5. Verfahren nach Anspruch 1, **dadurch gekennzeichnet, dass** die sichtbare Kontur des realen Werkstückes in mehrere Sektoren aufgeteilt und in jedem Sektor eine Teilmessung bestimmter Punkte durchgeführt wird, wodurch Korrekturwerte für jeden Sektor ermittelt werden, so dass Werkstück- und Lagetoleranzen ermittelt und der Verlauf der Roboterbewegung berechnet werden.

## Claims

1. Process for working a contour on at least one workpiece, particularly for welding or sealing a seam between two workpieces, particularly between two body parts, by means of a robot,
having the following process steps:
- positioning in relation to the robot the workpiece that is to be worked, and/or acquiring the actual position of the workpiece,
- acquiring the real course of the contour on the workpiece, at predefined points, by means of at least one sensor,
- actuating the robot according to the individual vectors for the purpose of correcting the motion of the robot during the working of the contour,
- **characterized in that**, for working an invisible, covered contour course, for example an invisible seam on an automobile body, close to a visible contour, visible points of the visible contour are first acquired and measured, and the position of the invisible seam is calculated therefrom.

2. Process according to Claim 1, by which a contour of a real workpiece that is subject to tolerances is worked, **characterized by** the following steps:
- positioning in relation to the robot an ideally produced workpiece, as a reference workpiece, determining the ideal course of the contour in that the robot, by means of at least one sensor, acquires the course of the contour on the reference workpiece, at predefined points,
- positioning in relation to the robot the real workpiece that is subject to tolerances, and/or acquiring the actual position of the real workpiece,
- acquiring the real course of the contour on the workpiece, at the predefined or other points, by means of at least one sensor, and thereby acquiring the deviation of the real course from the ideal course at the predefined points,
- calculating individual vectors corresponding to the deviations, and actuating the robot according to the individual vectors for the purpose of correcting the motion of the robot during the working of the contour.

3. Process according to either one of Claims 1 and 2, **characterized in that** the workpiece is transported, by means of a conveyor system, into a robot station that comprises the robot.

4. Process according to Claim 2, **characterized in that** the position of the workpiece is determined by means of at least one position sensor, particularly an optical identification system.

5. Process according to Claim 1, **characterized in that** the visible contour of the real workpiece is divided into a plurality of sectors and a partial measurement of certain points is performed in each sector, as a result of which correction values are determined for each sector, such that workpiece and positional tolerances are determined and the course of the robot motion is calculated.

## Revendications

1. Procédé d'usinage d'un contour sur au moins une pièce à usiner, notamment pour le soudage ou l'étanchéité d'un joint entre deux pièces à usiner, notamment entre deux parties de carrosserie, au moyen d'un robot, comprenant les étapes suivantes:
- positionnement de la pièce à usiner sur le robot et/ou détection de la position réelle de la pièce à usiner,
- détection de la courbe réelle du contour sur la pièce à usiner en des points prédéterminés au moyen d'au moins un capteur,
- pilotage du robot d'une manière qui correspond aux vecteurs individuels afin de corriger le mouvement du robot lors de l'usinage du contour,
**caractérisé en ce que**, pour usiner une courbe de contour recouverte non visible, par exemple d'un joint non visible sur une carrosserie d'automobile à proximité d'un contour visible, les premiers points visibles sur le contour visible sont détectés et mesurés et la position du joint non visible est calculée à partir de ceux-ci.

2. Procédé selon la revendication 1, au moyen duquel un contour d'une pièce à usiner réelle affectée de tolérances est usiné, **caractérisé par** les étapes suivantes:
- positionnement d'une pièce à usiner fabriquée de manière idéale en tant que pièce à usiner de référence sur le robot, obtention de la courbe idéale du contour de telle manière que le robot détecte au moyen d'au moins un capteur la courbe du contour sur la pièce à usiner de référence en des points prédéterminés,
- positionnement de la pièce à usiner réelle affectée de tolérances sur le robot et/ou détection de la position réelle de la pièce à usiner réelle,
- détection de la courbe réelle du contour sur la pièce à usiner en des points prédéterminés ou d'autres points au moyen d'au moins un capteur et ainsi, de l'écart entre la courbe réelle aux points prédéterminés et la courbe idéale,
- calcul des vecteurs individuels correspondant aux écarts et pilotage du robot d'une manière qui correspond aux vecteurs individuels afin de corriger le mouvement du robot lors de l'usinage du contour.

3. Procédé selon l'une des revendications 1 et 2, **caractérisé en ce que** la pièce à usiner est transportée avec le robot au moyen d'un système transporteur dans un poste robotisé.

4. Procédé selon la revendication 2, **caractérisé en ce que** la position de la pièce à usiner est déterminée au moyen d'au moins un capteur de position, notamment d'un système de reconnaissance optique.

5. Procédé selon la revendication 1, **caractérisé en ce que** le contour visible de la pièce à usiner réelle est décomposé en plusieurs secteurs et **en ce que** dans chaque secteur, une mesure partielle de points déterminés est effectuée, cela permettant de déterminer des valeurs de correction pour chaque secteur de manière à obtenir des tolérances concernant la pièce à usiner et la position et de calculer la trajectoire de mouvement du robot.
